(19) Europäisches Patentamt
European Patent Office
Office européen des brevets

(11) **EP 2 686 537 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **12701237.5**

(22) Anmeldetag: **10.01.2012**

(51) Int Cl.:
*F02D 11/10* $^{(2006.01)}$    *H02P 6/16* $^{(2016.01)}$

(86) Internationale Anmeldenummer:
**PCT/EP2012/050279**

(87) Internationale Veröffentlichungsnummer:
**WO 2012/123133 (20.09.2012 Gazette 2012/38)**

(54) **VERFAHREN UND VORRICHTUNG ZUM KALIBRIEREN EINES STELLGEBERSYSTEMS MIT EINEM ELEKTRONISCH KOMMUTIERTEN STELLANTRIEB**

METHOD AND DEVICE FOR CALIBRATING A POSITIONER SYSTEM HAVING AN ELECTRONICALLY COMMUTATED SERVOMOTOR

PROCÉDÉ ET DISPOSITIF D'ÉTALONNAGE D'UN SYSTÈME DE DÉTECTION DE POSITION COMPRENANT UN MÉCANISME DE COMMANDE COMMUTÉ ÉLECTRONIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2011 DE 102011005566**

(43) Veröffentlichungstag der Anmeldung:
**22.01.2014 Patentblatt 2014/04**

(73) Patentinhaber: **Robert Bosch GmbH**
**70442 Stuttgart (DE)**

(72) Erfinder:
- **GROSSMANN, Alex**
  **71229 Leonberg (DE)**
- **SIEBER, Udo**
  **74321 Bietigheim (DE)**
- **BUEHRLE, Ralf**
  **71686 Hochberg (DE)**
- **TOSUN, Zeynep**
  **34515 Esenyurt Istanbul (TR)**

(56) Entgegenhaltungen:
**EP-A2- 1 338 775**    **DE-A1- 10 065 488**
**US-A- 5 606 950**

## Beschreibung

Technisches Gebiet

Die Erfindung betrifft Stellgebersysteme mit elektronisch kommutierten Stellantrieben, bei denen eine Stellung eines zu stellenden Stellglieds durch einen Stellungsdetektor zurückgelesen werden kann.

Stand der Technik

In einem Kraftfahrzeug werden zahlreiche Stellgeber verwendet. Die Stellgeber umfassen üblicherweise einen elektromotorischen Stellantrieb, ein Getriebe oder eine Mechanik sowie ein Stellglied, dessen Stellung durch den Stellantrieb und über das Getriebe eingestellt werden kann. Beispielsweise können derartige Stellgeber als Drosselklappensteller, als Abgasrückführungsventil, für Ladungsbewegungsklappen und zahlreiche vergleichbare Komponenten eingesetzt werden. Ein Beispiel ist in dem Dokument EP 1 338 775 A2 offenbart. Je nach Einsatzgebiet sind derartige Stellgeber häufig mit einem Stellungsdetektor zum Rücklesen der tatsächlichen Iststellung des Stellglieds versehen. Ein solcher Stellungsdetektor kann zum einen zum Überprüfen der korrekten Stellung des Stellglieds verwendet werden. Dadurch kann überwacht werden, dass die angesteuerte Stellung des Stellgebers auch der tatsächlichen Stellung des Stellglieds entspricht. Zum anderen kann mithilfe der durch den Stellungsdetektor erfassten Iststellung eine Positionsregelung des Stellglieds durchgeführt werden, indem die gemessene Iststellung im Vergleich zur vorgegebenen Sollstellung geregelt wird.

Üblicherweise werden als Stellantriebe für derartige Stellgeber bürstenkommutierte Elektromotoren verwendet. Diese haben jedoch den Nachteil, dass sie durch die Entstehung von Bürstenfeuer ein verschlechtertes EMV-Verhalten aufweisen. Weiterhin weisen sie beispielsweise aufgrund von Reibung der Bürsten auf einem Kommutator einen höheren Energieverbrauch auf und haben aufgrund des Verschleißes der Bürsten eine verringerte Lebensdauer.

Diese Nachteile treffen nicht auf elektronisch kommutierte Elektromotoren als Stellantriebe zu. Elektronisch kommutierte Stellantriebe erfordern jedoch eine externe Kommutierung, wozu eine Kenntnis der Läuferlage erforderlich ist, um eine optimale Kommutierung zu gewährleisten. Die üblichen Verfahren zur Erfassung der Läuferlage verwenden zusätzliche Läuferlagesensoren im Elektromotor, die die Herstellung des Stellantriebs insgesamt aufwändiger machen. Zudem erhöht sich der Verkabelungsaufwand zwischen dem Stellantrieb und dem entsprechenden Steuergerät.

Auch sensorlose Verfahren, die beispielsweise auf einer Messung der in der Statorwicklung induzierten Spannung basieren, wie z. B. das Back-EMF-Verfahren, erfordern eine aufwändige Beschaltung im Steuergerät und sind für einen Stellgeber in der Regel zu aufwändig.

Alternative sensorlose Verfahren, bei denen die Läuferlage über eine Messung der Läuferlage der abhängigen Induktivität der Statorspulen bestimmt wird, benötigen ebenfalls eine aufwändige Beschaltung im Steuergerät und sind zudem nicht so robust und zuverlässig wie die sensorgebundenen Verfahren zum Messen der Rotorlage.

Es sind Stellgebersysteme bekannt, bei denen der Stellungsdetektor, der an dem Stellglied oder an dem das Stellglied ansteuernden Getriebe angeordnet ist, direkt für die Kommutierung des bürstenlosen Elektromotors verwendet wird. Hierbei wird die Stellungsangabe, die von dem Stellungsdetektor bereitgestellt wird, in eine Läuferlage umgerechnet, um die Kommutierung herbeiführen zu können.

Bei der Ansteuerung des elektronisch kommutierten Stellantriebs erhält man den besten Wirkungsgrad bezüglich des Drehmoments bei einer Voreilung des Motormagnetfelds zu dem von dem Läufer des Stellantriebs bewirkten Erregermagnetfeld von 90° (elektrischer Läuferlage). Verschiedene Einflüsse, wie beispielsweise Alterungseinflüsse auf den Stellungsdetektor, die sich in einer Drift auswirken, und Genauigkeitsverluste aufgrund eines untersetzenden Getriebes, das das Stellglied mit dem Stellantrieb koppelt, sowie dessen Toleranzen führen jedoch zu einer verminderten Genauigkeit der aus der Stellungsangabe ermittelten Läuferlage. Dies kann dazu führen, dass die Kommutierung des Stellantriebs auf Grundlage einer fehlerhaften Läuferlage durchgeführt wird, so dass nur ein reduziertes Drehmoment zum Stellen bereitsteht.

Da die Zuordnung der von dem Stellungsdetektor ermittelten Stellungsangabe zu der tatsächlichen Läuferlage in der Regel bei Inbetriebnahme des Stellgebersystems nicht feststeht, muss eine Kalibrierung durchgeführt werden. Eine solche Kalibrierung kann beispielsweise durch das Ansteuern des Stellantriebs mit Kommutierungsmustern im gesteuerten Betrieb durchgeführt werden, die eine definierte Richtung des Motormagnetfelds bewirken. Im gesteuerten Betrieb soll sich das Erregermagnetfeld des Läufers auf das Motormagnetfeld ausrichten, so dass die Läuferlage der Richtung des Motormagnetfelds entspricht. Der so ermittelten Läuferlage kann eine Stellung des Stellglieds zugeordnet werden.

Beim Bewegen des Stellglieds während des Kalibrierungsverfahrens wirken in der Regel nicht konstante Gegenkräfte, die beispielsweise aufgrund von Reibung oder dergleichen oder auch aufgrund einer das Stellglied beaufschlagenden Rückstellkraft auftreten können. Diese Gegenkräfte erschweren das Kalibrierungsverfahren, da sie eine zunächst nicht bekannte Abweichung der Läuferlage gegenüber einem nicht mit Gegenkräften beaufschlagten Stellglied bewirken können.

Es ist daher Aufgabe der vorliegenden Erfindung, ein Verfahren und eine Vorrichtung zum Kalibrieren eines Stellgebersystems bei Verwendung eines externen Stellungsdetektors zur Kommutierung vorzusehen, das den Einfluss von nicht konstanten Gegenkräften auf das Stellglied und/oder auf den Läufer kompensiert.

Offenbarung der Erfindung

Diese Aufgabe wird durch das Verfahren zum Kalibrieren eines Stellgebersystems gemäß Anspruch 1 sowie durch die Vorrichtung und das Stellgebersystem gemäß den nebengeordneten Ansprüchen gelöst.
Weitere vorteilhafte Ausgestaltungen der vorliegenden Erfindung sind in den abhängigen Ansprüchen angegeben.
Gemäß einem ersten Aspekt ist ein Verfahren zum Kalibrieren eines Stellgebersystems vorgesehen, wobei das Stellgebersystem einen elektronisch kommutierten Stellantrieb und ein damit gekoppeltes, gegenkraftbeaufschlagtes Stellglied aufweist, wobei eine Stellung des Stellglieds detektiert wird, um eine Stellungsangabe zu erhalten, und wobei eine Kommutierung des Stellantriebs zum Erzeugen eines Motormagnetfelds basierend auf einer mithilfe der Stellungsangabe ermittelten Läuferlage durchgeführt wird, mit folgenden Schritten:

- Ansteuern des Stellantriebs, so dass ein erstes Motormagnetfeld einer ersten Stärke generiert wird, und Ermitteln einer ersten Stellungsangabe für die Stellung des auf das erste Motormagnetfeld ausgerichteten Stellglieds;
- Ansteuern des Stellantriebs, so dass ein zweites Motormagnetfeld einer zweiten Stärke generiert wird, und Ermitteln einer zweiten Stellungsangabe für die Stellung des auf das zweite Motormagnetfeld ausgerichteten Stellglieds, wobei die Richtungen des ersten und des zweiten Motormagnetfelds identisch sind;
- basierend auf der ersten und der zweiten Stellungsangabe Ermitteln einer Stellungsangabe, die eine Stellung des Stellglieds unter der Annahme angibt, dass das Stellglied nicht mit einer Gegenkraft beaufschlagt ist;
- Zuordnen der ermittelten Stellungsangabe zu einer Läuferlage, die der Lage der Richtung des ersten und zweiten Motormagnetfelds entspricht.

Eine Idee des obigen Verfahrens besteht darin, eine oder mehrere Läuferlagen eines Stellantriebs des Stellgebersystems zu kalibrieren, indem für eine Richtung eines Motormagnetfelds mindestens zwei verschiedene Stärken von Motormagnetfeldern generiert und entsprechende Stellungsangaben über die Stellung des Stellglieds erfasst werden. Unter der Annahme einer linearen Abhängigkeit der Gegenkraft zu einer Abweichung der Stellung des Stellglieds von der Stellung bei einem gegenkraftfreien Stellglied, kann basierend auf den Stellungsangaben bei der bestimmten Richtung des Motormagnetfelds die Stellungsangabe über die Stellung eines gegenkraftfreien Stellglieds ermittelt werden. Diese ermittelte Stellungsangabe kann der Richtung des Motormagnetfelds, die der Richtung des Erregermagnetfelds bei einem gegenkraftfreien Stellglied entspricht, zugeordnet werden. Dadurch ist ein Kalibrieren der Läuferlage zu einer Stellungsangabe durch zweimaliges Ansteuern des Stellantriebs mit Motormagnetfeldern gleicher Richtung und unterschiedlicher Stärken durchführbar und die Einflüsse von Gegenkräften während des Kalibrierungsverfahrens können eliminiert werden.
Weiterhin kann das Ermitteln der Stellungsangabe, die eine Stellung des Stellglieds unter der Annahme angibt, dass das Stellglied nicht mit einer Gegenkraft beaufschlagt ist; durch Extrapolieren, insbesondere durch lineares Extrapolieren, der ersten und der zweiten Stellungsangabe ermittelt werden.
Gemäß einer Ausführungsform kann das Extrapolieren auf einen Punkt erfolgen, bei dem die Stärke des Motormagnetfelds Null oder nahezu Null entspricht.
Insbesondere kann der Stellantrieb mithilfe von Phasenspannungen ansteuerbar sein, wobei die Stärke des Motormagnetfelds durch ein Tastverhältnis von an den Stellantrieb angelegten Phasenspannungen bestimmt wird und/oder wobei die Richtung des Motormagnetfelds durch das Verhältnis der Phasenspannungen bestimmt wird.
Gemäß einem weiteren Aspekt ist eine Vorrichtung zum Kalibrieren eines Stellgebersystems vorgesehen, wobei das Stellgebersystem einen elektronisch kommutierten Stellantrieb und ein damit gekoppeltes, gegenkraftbeaufschlagtes Stellglied aufweist, wobei eine Stellung des Stellglieds detektiert wird, um eine Stellungsangabe zu erhalten, und wobei eine Kommutierung des Stellantriebs zum Erzeugen eines Motormagnetfelds basierend auf einer mithilfe der Stellungsangabe ermittelten Läuferlage durchgeführt wird, wobei die Vorrichtung ausgebildet ist, um:

- den Stellantrieb so anzusteuern, dass ein erstes Motormagnetfeld einer ersten Stärke generiert wird, und eine erste Stellungsangabe für die Stellung des auf das erste Motormagnetfeld ausgerichteten Stellglieds zu ermitteln;
- den Stellantrieb so anzusteuern, dass ein zweites Motormagnetfeld einer zweiten Stärke generiert wird, und eine zweite Stellungsangabe für die Stellung des auf das zweite Motormagnetfeld ausgerichteten Stellglieds zu ermitteln, wobei die Richtungen des ersten und des zweiten Motormagnetfelds identisch sind;
- basierend auf der ersten und der zweiten Stellungsangabe eine Stellungsangabe zu ermitteln, die eine Stellung des Stellglieds unter der Annahme angibt, dass das Stellglied nicht mit einer Gegenkraft beaufschlagt ist;
- die ermittelte Stellungsangabe einer Läuferlage zuzuordnen, die der Lage der Richtung des ersten und zweiten Motormagnetfelds entspricht.

Gemäß einem weiteren Aspekt ist ein Stellgebersystem vorgesehen, umfassend:

- einen elektronisch kommutierten Stellantrieb;
- ein gegenkraftbeaufschlagtes Stellglied, das mit dem Stellantrieb gekoppelt ist;
- einen Stellungsdetektor, um eine Stellung des Stellglieds zu detektieren und eine Stellungsangabe, die die Stellung des Stellglieds angibt, bereitzustellen,
- ein Steuergerät zum Durchführen einer Kommutierung des Stellantriebs zum Erzeugen eines Motormagnetfelds basierend auf einer mithilfe der Stellungsangabe ermittelten Läuferlage;
- eine Vorrichtung zum Kalibrieren des Stellgebersystems, wobei die Vorrichtung das Steuergerät veranlasst,

  • den Stellantrieb so anzusteuern, dass ein erstes Motormagnetfeld einer ersten Stärke generiert wird, und eine erste Stellungsangabe für die Stellung des auf das erste Motormagnetfeld ausgerichteten Stellglieds zu ermitteln;
  • den Stellantrieb so anzusteuern, dass ein zweites Motormagnetfeld einer zweiten Stärke generiert wird, und eine zweite Stellungsangabe für die Stellung des auf das zweite Motormagnetfeld ausgerichteten Stellglieds zu ermitteln, wobei die Richtungen des ersten und des zweiten Motormagnetfelds identisch sind;

  und wobei die Vorrichtung ausgebildet ist, um

  • basierend auf der ersten und der zweiten Stellungsangabe eine Stellungsangabe zu ermitteln, die eine Stellung des Stellglieds unter der Annahme angibt, dass das Stellglied nicht mit einer Gegenkraft beaufschlagt ist; und
  • die ermittelte Stellungsangabe einer Läuferlage zuzuordnen, die der Lage der Richtung des ersten und zweiten Motormagnetfelds entspricht.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1 eine schematische Darstellung eines Stellgebersystems, bei dem ein externer Stellungsdetektor für eine Kommutierung des Stellantriebs verwendet wird;

Figur 2 ein Diagramm zur Veranschaulichung des Drehmoments abhängig von einer Winkeldifferenz zwischen dem Motormagnetfeld und dem von dem Läufer erzeugten Erregermagnetfeld bei konstantem Motorstrom; und

Figur 3 ein Diagramm zur Veranschaulichung der Abhängigkeit des an dem Stellglied wirkenden Drehmoments pro Stromeinheit über dem Versatzwinkel zwischen dem Motormagnetfeld und dem Erregermagnetfeld des Läufers.

Beschreibung von Ausführungsformen

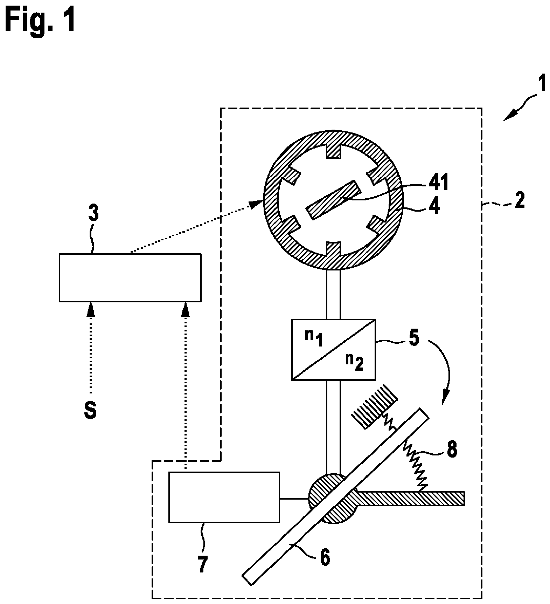

Figur 1 zeigt ein Stellgebersystem 1 mit einem Stellgeber 2, der von einem Steuergerät 3 angesteuert wird. Der Stellgeber 2 umfasst als Stellantrieb 4 einen elektronisch kommutierten, d. h. bürstenlosen, Elektromotor, wie beispielsweise einen Synchronmotor, einen Asynchronmotor oder dergleichen. Der Stellantrieb 4 weist eine Abtriebswelle auf, die mit einem Getriebe 5 gekoppelt ist. Das Getriebe 5 ist weiterhin mit einem Stellglied 6 gekoppelt. Das Stellglied 6 soll angesteuert durch das Steuergerät 3 in eine vorgegebene Stellung verfahren bzw. verstellt werden. Das Steuergerät erhält dazu eine Stellungsvorgabe S wie z.B. ein Fahrerwunschmoment bei einem Drosselklappensteller.

Das Getriebe 5 ist insbesondere als untersetzendes Getriebe 5 ausgebildet, so dass einem Läuferweg ein kleinerer Stellweg des Stellglieds 6 zugeordnet ist. Alternativ zu dem Getriebe 5 kann auch eine koppelnde Mechanik vorgesehen sein.

An dem Stellglied 6 oder alternativ an dem Getriebe 5 ist ein Stellungsdetektor 7 angeordnet. Mithilfe des Stellungsdetektors 7 kann eine Stellbewegung bzw. die Stellung des Stellglieds 6 erfasst werden. Eine Stellungsangabe über die erfasste Stellung des Stellglieds 6 wird in geeigneter Weise an das Steuergerät 3 übermittelt. Beispielsweise kann der Stellungsdetektor einen GMR-Sensor (GMR: Giant Magnetic Resistance), einen Hall-Sensor oder dergleichen aufweisen. Alternativ können auch optische Verfahren angewendet werden. Als Stellungsangabe kann beispielsweise eine Detektorspannung an das Steuergerät bereitgestellt werden, die die Stellungsangabe z. B. mithilfe eines Analog-Digital-Wandlers vor der Weiterverarbeitung digitalisiert.

Derartige Stellgeber 2 werden beispielsweise in Kraftfahrzeugen eingesetzt, beispielsweise bei Drosselklappen, Abgasrückführungsventilen, Ladungsbewegungsklappen und zahlreichen ähnlichen Komponenten. Insbesondere finden solche Stellgeber 2 dort Einsatz, wo die korrekte Stellbewegung des Stellgebers 2 funktionswesentlich ist und daher ohnehin der Stellungsdetektor 7 an dem Stellglied 6 vorgesehen ist, um dessen Stellung zu überprüfen.

Beim Verstellen des Stellglieds 6 wirkt auf dieses aufgrund von Reibungen sowohl im Getriebe 5 als auch in dem Stellantrieb und dem Stellglied eine der Stellbewegung entgegengesetzte Gegenkraft. Weiterhin kann das Stellglied 6 je nach Einsatzgebiet mit einer Rückstellkraft beaufschlagt sein, die beispielsweise über eine Rückstellfeder 8, insbesondere eine vorgespannte Rückstellfeder 8, auf das Stellglied 6 einwirkt, so dass das Stellglied 6 im stromlosen Zustand des Stellantriebs 4 in eine Ruheposition gebracht wird.

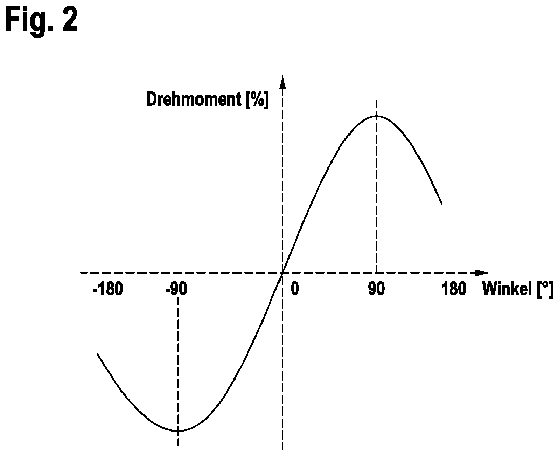

Zum Betreiben des elektronisch kommutierten Stellantriebs 4 ist eine Kenntnis der Läuferlage eines in dem Stellantrieb 4 vorgesehenen Läufers 41 erforderlich. Das Ansteuern erfolgt in der Regel durch Ansteuersignale bzw. Kommutierungssignale, die eine Statormagnetisierung hervorrufen, die zur Erzeugung eines Motormagnetfelds führt. Das Motormagnetfeld wechselwirkt mit dem Erregermagnetfeld, das von dem Läufer 41 generiert wird, und führt so zur Erzeugung eines Antriebsmoments. Bezüglich eines bestimmten Motorstroms durch die Statorwicklungen ist das erzeugte Drehmoment abhängig von dem Winkel zwischen der Richtung des Motormagnetfelds und der Richtung des Erregermagnetfelds. Bezüglich eines bestimmten Motorstroms wird das Maximum des Drehmoments bei einem Voreilungswinkel des Motormagnetfelds zum Statormagnetfeld von 90° erreicht. Bei Abweichungen von diesem Voreilungswinkel nimmt das Drehmoment bezüglich des bestimmten Motorstroms ab. In Figur 2 ist ein Verlauf des Drehmoments bei einem bestimmten Motorstrom über dem Voreilungswinkel aufgetragen.

Im vorliegenden Stellgebersystem 1 ist nun vorgesehen, auf das Vorsehen eines Läuferlagesensors oder eines Verfahrens zur sensorlosen Erfassung der Läuferlage zu verzichten und stattdessen den Stellungsdetektor 7, der fest mit dem Stellglied 6 gekoppelt ist, zu verwenden, um die aktuelle Läuferlage zu ermitteln.

Wird in einem Stellgebersystem 1 der Stellungsdetektor 7 zum Überprüfen der tatsächlichen Stellung des Stellglieds 6 gefordert, so kann der bürstenlose Stellantrieb 4 ohne einen Läuferlagesensor vorgesehen werden, da stattdessen die Stellung des Stellungsdetektors 7 verwendet werden kann, um die Läuferlage aus der Stellung des Stellglieds 6 abzuleiten. Die Zuordnung des Stellglieds 6 zu der Läuferlage des Läufers des Stellantriebs 4 erfolgt unter Berücksichtigung des Unter- bzw. Übersetzungsverhältnisses des Getriebes 5 bzw. der Mechanik. Die Zuordnung erfolgt in dem Steuergerät 3 mithilfe einer vorgegebenen Zuordnungsfunktion oder einer Lookup-Tabelle.

In einem Beispiel kann der Elektromotor des Stellantriebs 4 als dreiphasiger Synchronmotor mit zwei Rotorpolpaaren vorgesehen sein. Die minimale Auflösung der Kommutierung beträgt dann 30° mechanischer Läuferlage. Dies entspricht auch der geforderten Auflösung der Läuferlageerkennung. Bei einem angenommenen Untersetzungsverhältnis des Getriebes 5 von 1:30 ist dann für eine ausreichende Diskriminierung der Läuferlage eine Auflösung des Stellungsdetektors 7 von 1° notwendig.

Bei Inbetriebnahme des Stellgebersystems 1 liegt keine Zuordnung zwischen der Stellungsangabe des Stellungsdetektors 7 und der tatsächlichen Läuferlage des Läufers 41 des Stellantriebs 4 vor. Es ist daher ein Kalibrierungsverfahren vorgesehen, das es ermöglicht, die Stellungsangaben in tatsächliche Läuferlagen umzuwandeln. Bei herkömmlichen Kalibrierungsverfahren für bürstenlose Elektromotoren wird der Verfahrweg im gesteuerten Betrieb abgefragt und eine entsprechende Zuordnung zwischen einem Raumzeigerwinkel eines angelegten Motormagnetfelds und der zugehörigen Stellung des Läufers 41 aufgezeichnet. Dies erfolgt unter der Annahme, dass sich das Erregermagnetfeld im gesteuerten Betrieb direkt in Richtung des Motormagnetfelds ausrichtet.

In der Praxis wirken jedoch aufgrund von Reibungskräften, beispielsweise des Getriebes 5 oder des Stellglieds 6 oder einer Rückstellkraft, Gegenkräfte, die zu einer Abweichung der Richtung des Motormagnetfelds bezüglich der Richtung des Erregermagnetfelds im gesteuerten Betrieb führen. Auch kann, wie dargestellt, das Stellglied 6 mit der Rückstellfeder 8 beaufschlagt sein, die zu einer erheblichen Abweichung der Ausrichtungen des Erregermagnetfelds und des Motormagnetfelds führen kann.

Um den Einfluss dieser Gegenkräfte in dem Kalibrierungsverfahren zu berücksichtigen und zu eliminieren, ist nun vorgesehen, für einen bestimmten Raumzeigerwinkel des den Stellantrieb 4 ansteuernden Kommutierungsmusters, das einem bestimmten Verhältnis der Phasenspannungen zueinander entspricht, zwei verschiedene Spannungsamplituden vorzusehen. Diese führen aufgrund der wirkenden Gegenkraft zu verschiedenen Stellungen des Stellglieds 6, die zu verschiedenen Stellungsangaben des Stellungsdetektors 7 führen.

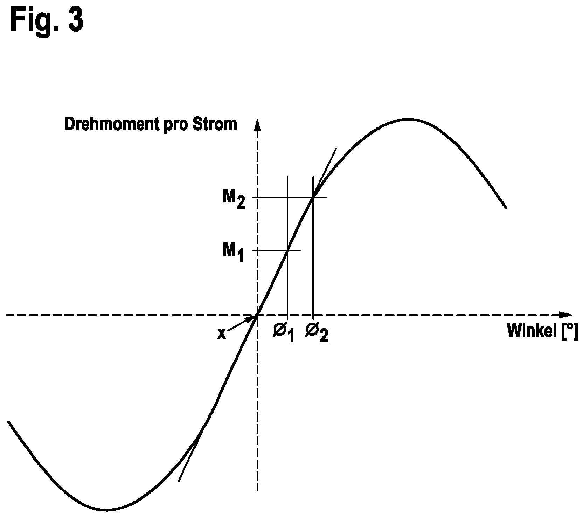

Wie in Figur 3 dargestellt, wird der lineare Teil der in Figur 2 dargestellten Kurve dazu benutzt, um aus den zwei Messpunkten bei einer bestimmten Position des Raumzeigers bzw. einer bestimmten Richtung des Motormagnetfelds (bei unterschiedlichen Stärken des Magnetfelds) die entsprechende Stellungsangabe $U_1$, $U_2$ zu ermitteln, beispielsweise in Form einer Detektorspannung, die vorliegen würde, wenn das Stellgebersystem 1 rückstellkraftfrei wäre, d. h. wenn keine Gegenkraft auf das Stellglied 6 einwirken würde. Dies ist möglich, da der Verlauf des Drehmoments bei einem bestimmten Motorstrom im Bereich eines Voreilungswinkels von 0° im Wesentlichen als linear angenommen werden kann. Daher gilt:

$$M_1 \times I_1 = M_2 \times I_2,$$

$$M_1 \times TV_1 = M_2 \times TV_2,$$

wobei $M_1$, $M_2$ das Drehmoment pro Stromeinheit bzw. das Drehmoment pro Tastverhältnis angeben. $I_1$, $I_2$ stellen Motorströme bei den Tastverhältnissen $TV_1$ bzw. $TV_2$

dar.

Die Stellungsangaben $U_1$, $U_2$ sind kleiner bei kleinerem Tastverhältnis TV. Je höher das Tastverhältnis TV ist, desto kräftiger ist der Stellantrieb 4 gegen Gegenkräfte. Mithilfe der Beziehung zwischen der Größe des Differenzwinkels $\Phi_1$, $\Phi_2$ und den gemessenen Detektorspannungen $U_1$, $U_2$ wird die kompensierte Stellungsangabe $U_0$ bei einer Läuferlage berechnet. Dabei wird die kompensierte Stellungsangabe $U_0$ von den bei verschiedenen Motorströmen gemessenen Stellungsangaben $U_1$, $U_2$ extrapoliert.

Bei einem herkömmlichen Stellgebersystem kann davon ausgegangen werden, dass das Drehmoment pro Motorstromeinheit bzw. pro Tastverhältniseinheit proportional zum Differenzwinkel zwischen dem Motormagnetfeld und dem Erregermagnetfeld ist. Es gilt:

$$M_1 \sim \Phi_1, \ M_2 \sim \Phi_2.$$

Daraus folgt:

$$\Phi_1 \times TV_1 = \Phi_2 \times TV_2$$

Da die Differenzwinkel $\Phi_1$, $\Phi_2$ der Differenz der Detektorspannung zwischen der jeweils gemessenen Detektorspannung $U_1$, $U_2$ und der Detektorspannung $U_0$, die bei einem rückstellkraftfreien Stellgebersystem 1 vorliegen würde, entsprechen, gilt:

$$(U_1 - U_0) \times TV_1 = (U_2 - U_0) \times TV_2$$

Daraus folgt:

$$U_0 = (U_1 \times TV_1 - U_2 \times TV_2) / (TV_1 - TV_2)$$

Auf diese Weise kann dem momentan angelegten Motormagnetfeld bzw. der Richtung des momentan angelegten Motormagnetfelds eine Stellungsangabe in Form einer Detektorspannung $U_0$ oder dergleichen zugeordnet werden, wodurch man eine Zuordnung einer der Richtung des Motormagnetfeldes entsprechenden Läuferlage und einer Stellungsangabe erhält.

Durch Überfahren des Raumzeigers zum Erzeugen des Motormagnetfelds so lange, bis sich das Stellglied über den gesamten Verstellbereich bewegt hat, ist es möglich, die Zuordnungen von Läuferlagen zu den Stellungsangaben des Stellungsdetektors 7 bei verschiedenen Motormagnetfeldrichtungen vorzunehmen. Die Läuferlagen erhält man nach obigem Verfahren durch Extrapolation auf eine Läuferlage, die sich ergäbe, wenn das Stellgebersystem gegenkraftfrei wäre.

**Patentansprüche**

1. Verfahren zum Kalibrieren eines Stellgebersystems (1), wobei das Stellgebersystem (1) einen elektronisch kommutierten Stellantrieb (4) und ein damit gekoppeltes, gegenkraftbeaufschlagtes Stellglied (6) aufweist, wobei eine Stellung des Stellglieds (6) detektiert wird, um eine Stellungsangabe zu erhalten, und wobei eine Kommutierung des Stellantriebs (4) zum Erzeugen eines Motormagnetfelds basierend auf einer mithilfe der Stellungsangabe ermittelten Läuferlage durchgeführt wird, mit folgenden Schritten:

   - Ansteuern des Stellantriebs (4), so dass ein erstes Motormagnetfeld einer ersten Stärke generiert wird, und Ermitteln einer ersten Stellungsangabe für die Stellung des auf das erste Motormagnetfeld ausgerichteten Stellglieds (6);
   - Ansteuern des Stellantriebs (4), so dass ein zweites Motormagnetfeld einer zweiten Stärke generiert wird, und Ermitteln einer zweiten Stellungsangabe für die Stellung des auf das zweite Motormagnetfeld ausgerichteten Stellglieds (6), wobei die Richtungen des ersten und des zweiten Motormagnetfelds identisch sind;
   - basierend auf der ersten und der zweiten Stellungsangabe, Ermitteln einer Stellungsangabe, die eine Stellung des Stellglieds (6) unter der Annahme angibt, dass das Stellglied (6) nicht mit einer Gegenkraft beaufschlagt ist;
   - Zuordnen der ermittelten Stellungsangabe zu einer Läuferlage, die der Richtung des ersten und zweiten Motormagnetfelds entspricht.

2. Verfahren nach Anspruch 1, wobei das Ermitteln der Stellungsangabe, die eine Stellung des Stellglieds (6) unter der Annahme angibt, dass das Stellglied (6) nicht mit einer Gegenkraft beaufschlagt ist, für die Stellung des Stellglieds (6) für das gegenkraftlose Stellglied durch Extrapolieren, insbesondere durch lineares Extrapolieren, der ersten und der zweiten Stellungsangabe ermittelt wird.

3. Verfahren nach Anspruch 2, wobei das Extrapolieren auf einen Punkt erfolgt, bei dem die Stärke des Motormagnetfelds Null oder nahezu Null entspricht.

4. Verfahren nach einem der Ansprüche 1 bis 3, wobei der Stellantrieb (4) mithilfe von Phasenspannungen ansteuerbar ist, wobei die Stärke des Motormagnetfelds durch ein Tastverhältnis von an den Stellantrieb angelegten Phasenspannungen bestimmt wird und/oder wobei die Richtung des Motormagnetfelds durch das Verhältnis der Phasenspannungen bestimmt wird.

5. Verfahren nach einem der Ansprüche 1 bis 4, wobei die Richtung des ersten und des zweiten Motormagnetfelds umlaufend ist und wobei mehrere Zuordnungen der jeweils ermittelten Stellungsangabe zu den Läuferlagen, die den Richtungen des ersten und zweiten Motormagnetfelds entsprechen, durchgeführt werden.

**6.** Vorrichtung zum Kalibrieren eines Stellgebersystems (1), wobei das Stellgebersystem (1) einen elektronisch kommutierten Stellantrieb (4) und ein damit gekoppeltes, gegenkraftbeaufschlagtes Stellglied (6) aufweist, wobei eine Stellung des Stellglieds (6) detektiert wird, um eine Stellungsangabe zu erhalten, und wobei eine Kommutierung des Stellantriebs (4) zum Erzeugen eines Motormagnetfelds basierend auf einer mithilfe der Stellungsangabe ermittelten Läuferlage durchgeführt wird, wobei die Vorrichtung ausgebildet ist, um:

   - den Stellantrieb (4) so anzusteuern, dass ein erstes Motormagnetfeld einer ersten Stärke generiert wird, und eine erste Stellungsangabe für die Stellung des auf das erste Motormagnetfeld ausgerichteten Stellglieds zu ermitteln;
   - den Stellantrieb (4) so anzusteuern, dass ein zweites Motormagnetfeld einer zweiten Stärke generiert wird, und eine zweite Stellungsangabe für die Stellung des auf das zweite Motormagnetfeld ausgerichteten Stellglieds zu ermitteln, wobei die Richtungen des ersten und des zweiten Motormagnetfelds identisch sind;
   - basierend auf der ersten und der zweiten Stellungsangabe eine Stellungsangabe zu ermitteln, die eine Stellung des Stellglieds (6) unter der Annahme angibt, dass das Stellglied (6) nicht mit einer Gegenkraft beaufschlagt ist;
   - die ermittelte Stellungsangabe zu einer Läuferlage zuzuordnen, die der Richtung des ersten und zweiten Motormagnetfelds entspricht.

**7.** Stellgebersystem (1) umfassend:

   - einen elektronisch kommutierten Stellantrieb (4);
   - ein gegenkraftbeaufschlagtes Stellglied (6), das mit dem Stellantrieb (4) gekoppelt ist;
   - einen Stellungsdetektor (7), um eine Stellung des Stellglieds zu detektieren und eine Stellungsangabe, die die Stellung des Stellglieds (6) angibt, bereitzustellen,
   - ein Steuergerät (3) zum Durchführen einer Kommutierung des Stellantriebs zum Erzeugen eines Motormagnetfelds basierend auf einer mithilfe der Stellungsangabe ermittelten Läuferlage;
   - eine Vorrichtung zum Kalibrieren des Stellgebersystems (1), wobei die Vorrichtung das Steuergerät (3) veranlasst,

   • den Stellantrieb (4) so anzusteuern, dass ein erstes Motormagnetfeld einer ersten Stärke generiert wird, und eine erste Stellungsangabe für die Stellung des auf das erste Motormagnetfeld ausgerichteten Stellglieds zu ermitteln;
   • den Stellantrieb (4) so anzusteuern, dass ein zweites Motormagnetfeld einer zweiten Stärke generiert wird, und eine zweite Stellungsangabe für die Stellung des auf das zweite Motormagnetfeld ausgerichteten Stellglieds zu ermitteln, wobei die Richtungen des ersten und des zweiten Motormagnetfelds identisch sind;

und wobei die Vorrichtung ausgebildet ist, um

   • basierend auf der ersten und der zweiten Stellungsangabe eine Stellungsangabe zu ermitteln, die eine Stellung des Stellglieds (6) unter der Annahme angibt, dass das Stellglied (6) nicht mit einer Gegenkraft beaufschlagt ist; und
   • die ermittelte Stellungsangabe einer Läuferlage zuzuordnen, die der Richtung des ersten und zweiten Motormagnetfelds entspricht.

**8.** Computerprogrammprodukt, das einen Programmcode enthält, der, wenn er auf einer Datenverarbeitungseinheit ausgeführt wird, das Verfahren nach einem der Ansprüche 1 bis 5 durchführt.

**Claims**

**1.** Method for calibrating a positioner system (1), wherein the positioner system (1) comprises an electronically commutated actuating drive (4) and an actuator (6) that is impinged by a counter force and is coupled to said actuating drive, wherein a position of the actuator (6) is detected in order to obtain a position variable, and wherein a commutation of the actuating drive (4) is carried out in order to generate a motor magnetic field based on a rotor position that is ascertained with the aid of the position variable, said method comprising the following steps:

   - controlling the actuating drive (4) so that a first motor magnetic field of a first magnitude is generated, and ascertaining a first position variable for the position of the actuator (6) that is aligned with the first motor magnetic field;
   - controlling the actuating drive (4) so that a second motor magnetic field of a second magnitude is generated, and ascertaining a second position variable for the position of the actuator (6) that is aligned with the second motor magnetic field, wherein the directions of the first and the second motor magnetic field are identical;

- based on the first and the second position variable ascertaining a position variable that indicates a position of the actuator (6) under the assumption that the actuator (6) is not impinged by a counter force;

- allocating the ascertained position variable to a rotor position that corresponds to the direction of the first and second motor magnetic field.

2. Method according to Claim 1, wherein the ascertainment of the position variable that indicates a position of the actuator (6), under the assumption that the actuator (6) is not impinged by a counter force, is ascertained for the position of the actuator (6) for the actuator that is not impinged by a counter force by means of extrapolation, in particular by means of linear extrapolation, of the first and the second position variable.

3. Method according to Claim 2, wherein the extrapolation is performed at a point where the magnitude of the motor magnetic field corresponds to zero or almost zero.

4. Method according to any one of Claims 1 to 3, wherein the actuating drive (4) can be controlled with the aid of phase voltages, wherein the magnitude of the motor magnetic field is ascertained by means of a duty cycle of phase voltages that are applied to the actuating drive and/or wherein the direction of the motor magnetic field is ascertained by means of the ratio of the phase voltages.

5. Method according to any one of Claims 1 to 4, wherein the direction of the first and the second motor magnetic field is circumferential and wherein several allocations of the respective ascertained position variable are made to the rotor positions that correspond to the directions of the first and second motor magnetic field.

6. Device for calibrating a positioner system (1), wherein the positioner system (1) comprises an electronically commutated actuating drive (4) and an actuator (6) that is impinged by a counter force and is coupled to said actuating drive, wherein a position of the actuator (6) is detected in order to obtain a position variable, and wherein a commutation of the actuating drive (4) is performed in order to generate a motor magnetic field based on a rotor position that is ascertained with the aid of the position variable, wherein the device is embodied in order:

- to control the actuating drive (4) in such a manner that a first motor magnetic field of a first magnitude is generated, and to ascertain a first position variable for the position of the actuator that is aligned with the first motor magnetic field;

- to control the actuating drive (4) in such a manner that a second motor magnetic field of a second magnitude is generated, and to ascertain a second position variable for the position of the actuator that is aligned with the second motor magnetic field, wherein the directions of the first and the second motor magnetic field are identical;

- to ascertain, based on the first and the second position variable, a position variable that indicates a position of the actuator (6) under the assumption that the actuator (6) is not impinged by a counter force;

- to allocate the ascertained position variable to a rotor position that corresponds to the direction of the first and second motor magnetic field.

7. Positioner system (1) comprising:

- an electronically commutated actuating drive (4);
- an actuator (6) that is impinged by a counter force and is coupled to the actuating drive (4);
- a position detector (7) in order to detect a position of the actuator and to provide a position variable that indicates the position of the actuator (6),
- a control device (3) for implementing a commutation of the actuating drive in order to generate a motor magnetic field based on the rotor position that is ascertained with the aid of the position variable;
- a device for calibrating the positioner system (1), wherein the device causes the control device (3):

• to control the actuating drive (4) in such a manner that a first motor magnetic field of a first magnitude is generated, and to ascertain a first position variable for the position of the actuator that is aligned with the first motor magnetic field;

• to control the actuating drive (4) in such a manner that a second motor magnetic field of a second magnitude is generated, and to ascertain a second position variable for the position of the actuator that is aligned with the second motor magnetic field, wherein the directions of the first and the second motor magnetic field are identical;

and wherein the device is embodied in order:

• to ascertain, based on the first and the second position variable, a position variable that indicates a position of the actuator (6) under the assumption that the actuator (6) is not impinged by a counter force; and

• to allocate the ascertained position variable to a rotor position that corresponds to the direction of the first and second motor magnetic field.

**8.** Computer program product that comprises a program code that performs the method according to any one of Claims 1 to 5 if it is implemented on a data processing unit.

**Revendications**

**1.** Procédé de calibrage d'un système codeur de position (1), le système codeur de position (1) possédant un mécanisme de commande (4) à commutation électronique et un actionneur (6) accouplé à celui-ci et sollicité par une force opposée, une position de l'actionneur (6) étant détectée afin d'obtenir une indication de position, et une commutation du mécanisme de commande (4) étant effectuée en vue de générer un champ magnétique de moteur en se basant sur une position de rotor déterminée à l'aide de l'indication de position, comprenant les étapes suivantes :

- excitation du mécanisme de commande (4) de sorte qu'un premier champ magnétique de moteur ayant une première intensité soit généré, et détermination d'une première indication de position pour la position de l'actionneur (6) orienté sur le premier champ magnétique de moteur ;
- excitation du mécanisme de commande (4) de sorte qu'un deuxième champ magnétique de moteur ayant une deuxième intensité soit généré, et détermination d'une deuxième indication de position pour la position de l'actionneur (6) orienté sur le deuxième champ magnétique de moteur, les directions du premier et du deuxième champ magnétique de moteur étant identiques ;
- détermination, en se basant sur la première et la deuxième indication de position, d'une indication de position qui indique une position de l'actionneur (6) selon l'hypothèse que l'actionneur (6) n'est pas sollicité par une force opposée ;
- affectation de l'indication de position déterminée à une position de rotor qui correspond à la direction du premier et du deuxième champ magnétique de moteur.

**2.** Procédé selon la revendication 1, la détermination de l'indication de position qui indique une position de l'actionneur (6) selon l'hypothèse que l'actionneur (6) n'est pas sollicité par une force opposée étant effectuée pour la position de l'actionneur (6) pour l'actionneur sans force opposée par extrapolation, notamment par extrapolation linéaire, des première et deuxième indications de position.

**3.** Procédé selon la revendication 2, l'extrapolation étant effectuée à un point auquel l'intensité du champ magnétique de moteur est nulle ou quasiment nulle.

**4.** Procédé selon l'une des revendications 1 à 3, le mécanisme de commande (4) pouvant être excité à l'aide de tensions de phase, l'intensité du champ magnétique de moteur étant définie par un rapport cyclique des tensions de phase appliquées au mécanisme de commande et/ou la direction du champ magnétique de moteur étant définie par le rapport des tensions de phase.

**5.** Procédé selon l'une des revendications 1 à 4, la direction du premier et du deuxième champ magnétique de moteur étant circonférentielle et plusieurs affectations de l'indication de position respectivement déterminée aux positions du rotor qui correspondent aux directions du premier et du deuxième champ magnétique étant effectuées.

**6.** Dispositif de calibrage d'un système codeur de position (1), le système codeur de position (1) possédant un mécanisme de commande (4) à commutation électronique et un actionneur (6) accouplé à celui-ci et sollicité par une force opposée, une position de l'actionneur (6) étant détectée afin d'obtenir une indication de position, et une commutation du mécanisme de commande (4) étant effectuée en vue de générer un champ magnétique de moteur en se basant sur une position de rotor déterminée à l'aide de l'indication de position, le dispositif étant configuré pour :

- exciter le mécanisme de commande (4) de sorte qu'un premier champ magnétique de moteur ayant une première intensité soit généré, et déterminer une première indication de position pour la position de l'actionneur orienté sur le premier champ magnétique de moteur ;
- exciter le mécanisme de commande (4) de sorte qu'un deuxième champ magnétique de moteur ayant une deuxième intensité soit généré, et déterminer une deuxième indication de position pour la position de l'actionneur orienté sur le deuxième champ magnétique de moteur, les directions du premier et du deuxième champ magnétique de moteur étant identiques ;
- déterminer, en se basant sur la première et la deuxième indication de position, une indication de position qui indique une position de l'actionneur (6) selon l'hypothèse que l'actionneur (6) n'est pas sollicité par une force opposée ;

- affecter l'indication de position déterminée à une position de rotor qui correspond à la direction du premier et du deuxième champ magnétique de moteur.

**7.** Système codeur de position (1), comprenant :

- un mécanisme de commande (4) à commutation électronique ;
- un actionneur (6) sollicité par une force opposée qui est accouplé au mécanisme de commande (4) ;
- un détecteur de position (7) pour détecter une position de l'actionneur et mettre à disposition une indication de position qui indique la position de l'actionneur (6) ;
- un contrôleur (3) destiné à effectuer une commutation du mécanisme de commande en vue de générer un champ magnétique de moteur en se basant sur une position de rotor déterminée à l'aide de l'indication de position ;
- un dispositif destiné à calibrer le système codeur de position (1), le dispositif amenant le contrôleur (3) à :
- exciter le mécanisme de commande (4) de sorte qu'un premier champ magnétique de moteur ayant une première intensité soit généré, et déterminer une première indication de position pour la position de l'actionneur orienté sur le premier champ magnétique de moteur ;
- exciter le mécanisme de commande (4) de sorte qu'un deuxième champ magnétique de moteur ayant une deuxième intensité soit généré, et déterminer une deuxième indication de position pour la position de l'actionneur orienté sur le deuxième champ magnétique de moteur, les directions du premier et du deuxième champ magnétique de moteur étant identiques ;

et le dispositif étant configuré pour

- déterminer, en se basant sur la première et la deuxième indication de position, une indication de position qui indique une position de l'actionneur (6) selon l'hypothèse que l'actionneur (6) n'est pas sollicité par une force opposée, et
- affecter l'indication de position déterminée à une position de rotor qui correspond à la direction du premier et du deuxième champ magnétique de moteur.

**8.** Produit de programme informatique qui contient un code de programme qui, lorsqu'il est exécuté sur une unité de traitement de données, met en oeuvre le procédé selon l'une des revendications 1 à 5.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1338775 A2